# EUROPEAN PATENT SPECIFICATION

(11) **EP 2 191 958 B1**
(45) Date of publication and mention of the grant of the patent: **27.06.2012**
(21) Application number: 08791829.8
(22) Date of filing: 29.07.2008
(51) Int. Cl.: B29D 30/60, B29D 30/20

(54) **Raw tire manufacturing method and apparatus**
Rohreifenherstellungsverfahren und -vorrichtung
Procédé et appareil de fabrication de pneu cru

(30) Priority: 05.09.2007 JP 2007230365; 18.04.2008 JP 2008108542
(43) Date of publication of application: 02.06.2010
(73) Proprietor: Bridgestone Corporation, Tokyo 104-8340 (JP)
(72) Inventor: OGAWA, Yuichiro, Kodaira-shi Tokyo 187-8531 (JP)
(74) Representative: Oxley, Robin John George
(86) International application number: PCT/JP2008/063594
(87) International publication number: WO 2009/031374

(56) References cited:
- EP-A2- 0 873 852
- EP-A2- 1 106 335
- JP-A- 01 285 337
- JP-A- 2003 326 614
- JP-A- 2004 358 738
- JP-A- 2006 007 708
- JP-A- 2007 152 723

## Description

### Technical Field

The present invention relates to a method and a device for producing a green tire, in which method and device a green tire is produced by using a ply band and a belt-tread band.

### Prior Art

Examples of the conventional method and device for producing a green tire include those disclosed in JP 01-285337 Laid-Open.

The molding apparatus of JP 01-285337 has: a first molding drum for molding a cylindrical ply band by winding at least a carcass around a periphery thereof; a secondary molding drum for molding a cylindrical belt-tread band around a periphery thereof by winding a tread on the outer side of a belt; a third molding drum capable of expansion-deforming the ply band into a substantially semicircular shape in a section including the center axis line when the ply band is supplied thereto; a first feed means for feeding the ply band from the first molding drum to the third molding drum; and a second feed means for feeding the belt-tread band from the second molding drum to the third molding drum and producing a green tire by attaching the belt-tread band on the outer side in the radial direction of the ply band which has been expansion -deformed to have a semicircular sectional shape.

Regarding the aforementioned tread, for example, a band-shaped rubber having a predetermined sectional shape is extruded from an extruder and the band-shaped rubber is cut sequentially by a cutter to substantially the same length as the outer peripheral length of the second molding drum, as tread strips. These tread strips thus cut out are temporarily stored in a store carriage and the treads are taken out from the storage carriage, according to necessity, supplied to the second molding drum, wound on the outer side of the belt, and molded to a cylindrical shape by jointing the starting and terminal ends thereof.

### Disclosure of the Invention

### Problems to be solved by the Invention

In the conventional production method and apparatus of a green tire as described above, since treads of which temperature has been dropped and rigidity has been increased due to temporary storage after extrusion are supplied to the second molding drum and wound therearound, compliant deformation of each tread to the second molding drum is not sufficient. As a result, there arises a problem that the tread thus molded may suffer from shape flaw and/or generation of air bubbles between the tread and the belt.

Further, there arises another problem that the treads suffer from partial shrinkage and deformation due to decrease in temperature described above, whereby variation in tread thickness occurs in the joint portion where the starting and terminal ends of each tread are jointed with each other and balance and/or uniformity of a tire deteriorates. Yet further, there arises yet another problem that a storage space and storage facilities are required in order to store the treads as described above and thus intermediate storage of the treads increases. EP 0 873 852 describes a known method of forming green tyres.

EP 1 106 335 describes a known plant and method to tyre forming. JP 01 285 337 describes a known tire molding apparatus. JP 2003 326 614 describes a known tire and method for manufacturing tread therefor.

The present invention has an object of providing a method and an apparatus for producing a green tire, in which method and apparatus balance and uniformity of a tire can be increased, while simplifying facilities, reducing space for the facilities and suppressing shape flows and generation of air bubbles.

### Means for solving the Problem

In order to achieve the aforementioned object, in a first aspect of the present invention, there is provided a method of producing a green tire as claimed in claim 1. drum plural times, to form at least a portion of the tread.

Further, in a second aspect of the present invention, an apparatus for producing a green tire is provided as claimed in claim 2.

### Effect of the Invention

In the present invention, there is provided an extruder which is adapted to either directly or indirectly supply an extruded rubber ribbon, prior to the rubber ribbon being completely cooled to the room temperature, to the second molding drum and spirally wind the rubber ribbon on the second molding drum plural times, such that the rubber ribbon constitutes at least a portion of the tread. Since the rubber ribbon remains at a relatively high temperature and soft when the rubber ribbon is wound around the second molding drum, the rubber ribbon easily deforms compliant to the second molding drum, whereby shape flaws of the tread and/or generation of air bubbles between the tread and the belt can be effectively suppressed.

Further, since at least a portion of the tread is structured by spirally winding the rubber ribbon plural times as described above, no joint portion of the starting and terminal ends of the rubber ribbon as observed in the prior art exists in the present invention. As a result, thickness of the tread is made even in the circumferential direction and balance and uniformity of a tire improve.
Further, since an extruded rubber ribbon is either directly supplied to the second molding drum or indirectly supplied to the second molding drum via a belt conveyer or the like or a non-extensible liner and then a festune, before the extruded rubber ribbon is completely cooled, a space for temporary storage and facilities for such storage are rendered unnecessary and intermediate storage of treads can be eliminated.

When the second molding drum is positioned at a delivery position, if a space between the second molding drum and the third molding drum is relatively marrow, i.e. the space is relatively narrow due to making the entire apparatus compact, a relatively large space is ensured on the first molding drum side of the third molding drum in a state in which the second molding drum has moved to a winding position and a rubber ribbon is being wound around the second molding drum, whereby a green tire produced on the third molding drum can be easily taken out therefrom.
It is possible to carry out a molding process which necessitates manual work of jointing members such as a carcass and a molding process which can be automated such as rubber ribbon lamination at different positions, respectively, whereby operation space can be efficiently ensured.

Yet further, according to the structure as recited in claim 3, a portion of tread composed of different rubber species can be easily molded by the second and the fourth molding drums, with avoiding interference between respective extruders. Yet further, although a relatively long time is required when tread is molded by spirally winding a rubber ribbon a number of times on the molding drums, the molding time for the tread as a whole can be shortened to be close to the molding time at the first and third molding drums by simultaneously winding a rubber ribbon on the second and fourth molding drums.

Yet further, according to the structure as recited in claim 4, the structures of another extruder and a belt supply means can be made simple, respectively, and a rubber ribbon and a belt can be easily wound around on the fourth molding drum with avoiding interference from another extruder and the belt supply means.
Yet further, according to the structure as recited in claim 5 or 8, a green tire having a dual layer tread structure including a base layer and a cap layer can be easily produced. Yet further, according to the structure as recited in claim 8, since the extruder is of small size, the apparatus as a whole can be easily made compact.

Yet further, according to the structure as recited in claim 7, portions of tread composed of different rubber species can be easily molded by the second and the fourth molding drums, with avoiding interference between an extruder and a sheet supply means and reducing the operation time. Yet further, since a relatively wide rubber sheet is supplied to the fourth molding drum and wound around the drum only one turn, the molding operation is made easy and the structure of the sheet supply means can be made simple.

### Brief Description of the Drawings

FIG. 1 is a schematic perspective view showing a first embodiment of the present invention.
FIG. 2 is a schematic plan view showing the first embodiment.
FIG. 3 is a partially exploded front view showing the vicinity of a first feed means.
FIG. 4 is a side view showing the vicinity of an extruder.
FIG. 5 is a side sectional view of the extruder.
FIG. 6 is a schematic plan view of the vicinity of a second molding drum showing a second embodiment of the present invention.
FIG. 7 is a schematic plan view showing a third embodiment of the present invention.

### Explanation of Reference Numerals

- 13: First molding drum
- 16: Ply and
- 33: Second molding drum
- 34: Belt-tread band
- 38 8: Third molding drum
- 47: Moving means
- 49: First feed means
- 102: Extruder
- 115: Rubber ribbon
- 124: Second feed means
- 136: Fourth molding drum
- 140: Extruder
- 141: Rubber ribbon
- 144: Belt
- 146: Moving means
- 149: Third feed means
- 181: Fourth molding drum
- 182: Rubber sheet
- 183: Sheet supply means
- 185: Third feed means

### Best Mode for implementing the Invention

An embodiment of the present invention will be described hereinafter with reference to the drawings.

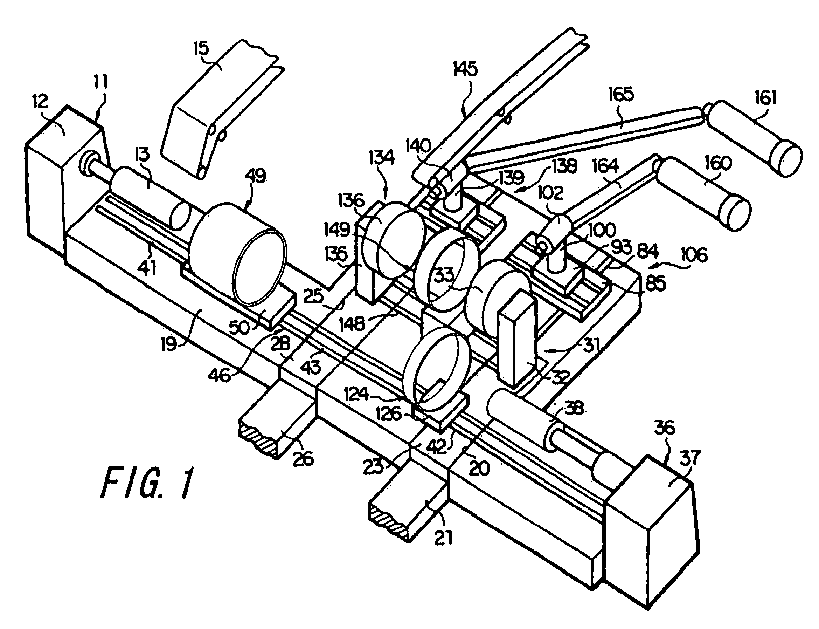

In FIGS. 1 and 2, 11 represents a first molding machine mounted on a floor. The first molding machine 11 has a driving portion 12 and a horizontal and cylindrical first molding drum 13 which extends forward from the driving portion 12 and is rotationally driven by the driving portion 12. The first molding drum 13 is radially extendable/retractable by the driving force from the driving portion 12.
On one side (the left hand side in the present embodiment) of the first molding drum 13, a member supply means 15 is provided for supplying a sheet or band-like tire constituting member 14 having substantially the same length as one circumference of the first molding drum 13. Examples of the tire constituting member 14 include innerliner, carcarss, rubber chafer, wire chafer, side rubber and the like. The member supply means 15 can move to approach the first molding drum 13 when the member supply means 15 supplies the tire constituting member 14 to the first molding drum 13 and winding the constituting member on the drum.

The tire constituting members 14, including at least a carcass, are sequentially supplied from the member supply means 15 to the periphery of the rotating first molding drum 13 and wound around the drum. When the starting and terminal ends of the tire constituting members 14 are jointed with each other, a cylindrical ply band 16 constituted of the laminated tire constituting member 14 is molded around the first molding drum 13.
The reference number 19 represents a flat base mounted on a floor situated further front of the first molding machine. A slit 20 extending in the left-right hand side or lateral directions is formed in the base 19. The left side portion of a guide plate 21, which plate is thinner than the base 19 and extends in the left-right hand side directions, is fixedly accommodated in the slit 20.

A pair of guide rails (not shown) extending along the guide plate 21 are provided on the upper surface of the guide plate 21. A slide bearing (not shown) provided at the lower surface of a slide plate 23 is slidably engaged with the guide rails. A slit 25 extending in parallel with the slit 20 is formed in a portion of the base 19 on the rear side of the slit 20. The left side portion of a guide plate 26, which plate is thinner than the base 19 and extends in the left-right hand side directions, is fixedly accommodated in the slit 25. A pair of guide rails (not shown) extending along the guide plate 26 are provided on the upper surface of the guide plate 26. A slide bearing (not shown) provided at the lower surface of a slide plate 28 is slidably engaged with the guide rails.

A second molding machine 31 is mounted on the upper surface of the left side portion of the slide plate 23. The second molding machine 31 has a driving portion 32 and a horizontal and cylindrical second molding drum 33, which extends rearward from the driving portion 32 and rotationally driven by the driving portion 32. The second molding drum 33, having a larger diameter than that of the first molding drum 13, is radially extendable/retractable by the driving force from the driving portion 32.
When a band intermediate body 35, constituted of a belt 144 and a portion of a tread, is supplied from a fourth molding drum 136 described below to the second molding drum 33, a rubber ribbon is supplied from an extruder 102 to the band intermediate body 35 and wound around the periphery thereof, for example, directly. As a result, a cylindrical belt-tread band 34 is molded around the periphery of the second molding drum 33. Regarding the rubber ribbon supplied from the extruder 102, it is possible to supply the rubber ribbon via a belt conveyer or the like or a non-extensible liner and then a festune and wind the rubber ribbon around the intermediate body 35.

The reference number 36 is a third molding machine mounted on the floor via the base 19 on the opposite side of the first molding machine 11. The third molding machine 36 has a driving portion 37 and a horizontal and cylindrical third molding drum 38, which extends rearward from the driving portion 37 and rotationally driven by the driving portion 37. The third molding drum 38 is disposed to face the first molding drum 13 on the same axial line and radially expandable/retractable by the driving force from the driving portion 37.
As a result, the second molding drum 33, under the action of the slide plate 23, is disposed between the third molding drum 38 and the first molding drum 13. The third molding drum 38, when the pry band 16 is supplied thereto from the first molding drum 13, is capable of expansion-deforming the pry band 16 into a semicircular shape in a section including the center axis, while supporting the pry band from the inner side thereof.

The reference number 41 represents a pair of guide rails provided on the upper surface of the base 19 and extending in parallel with the axial line of the first molding drum 13. The guide rails 41 extend from the position right under the first molding drum 13 to the position right under the third molding drum 38 and terminate at the position of the slide plates 23, 28.
On the other hand, a pair of guide rails 42, 43 extending in parallel with the guide rails 41 are provided on the upper surfaces of the right side portions of the slide plates 23, 28, respectively. The distance between the paired guide rails 42 and the distance between the paired guide rails 43 are equal to the distance between the guide rails 41, respectively.

The reference number 44, 45 represent piston rods of a fluid cylinder connected to the right end portions of the guide plates 21, 26 and extending in parallel with the guide plates 21, 26, respectively. The tip ends (the left hand side ends) of the piton rods 44, 45 are connected to the slide plates 23, 28, respectively.
Accordingly, when the fluid cylinder operates to protrude the piston rods 44, 45 and move the slide plates 23, 28 to the left end limit, the guide rails 42, 43 are positioned in line with the guide rails 41 and made continuous therewith, forming a pair of substantially seamless rails 46 as shown.

In the present embodiment, when the slide plate 23 is moved to the left end limit as described above, the second molding drum 33 exists at a winding position where a rubber ribbon described below is wound therearound. On the other hand, when the piston rod 44 is retracted and the slide plate 23 is moved to the right end limit, the second molding drum 33 is displaced to a delivery position, shown in phantom line in the drawing, where the second molding drum 33 is coaxial with the first molding drum 13.
The slide plate 23 and the fluid cylinder, as a whole, constitute a moving means 47 for moving the second molding drum 33 between the delivery position on the axial line and the winding position distanced on one side (the left hand side in the present embodiment) of the axial line.

In FIGS. 1, 2 and 3, the reference number 49 represents a first feed means movable along the guide rails 46. Plural slide bearings 51, which are slidably engaged with the guide rails 46, are fixed on the lower surface of a moving frame 50 of the first feed means 49.
On the other hand, a pair of guide rails 52 extending in parallel with the guide rails 46 are provided on the upper surface of the moving frame 50. Plural slide bearings 55, 56, respectively fixed on the lower surfaces of the moving plates53, 54 distanced in the front-rear direction, are slidably enganged with the guide rails 52.

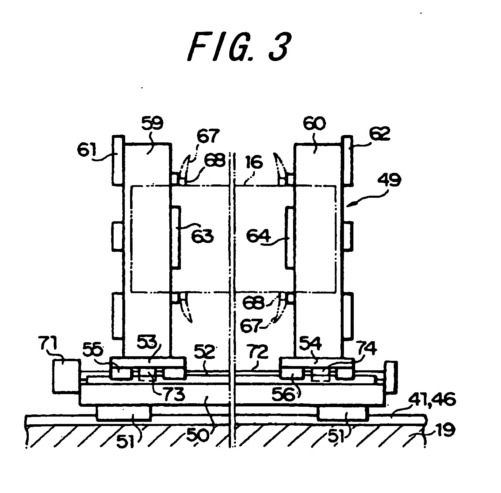

As shown in FIG. 3, the reference numbers 59, 60 represent coaxial support rings fixed on the upper surfaces of the moving plates 53, 54, respectively. Plural holders 61, 62 movable in the radial direction are supported by the support rings 59, 60, respectively, such that the plural holders 61, 62 are distanced from each other in the circumferential direction with a constant distance therebetween. Arcuate bodies 63, 64, in which permanent magnets for sucking the pry band 16 are mounted, are fixed at the inner ends in the radial direction of the holders 61, 62, respectively. Vacuum caps may be used in place of the permanent magnets.

When the first feed means 49 is stopping at a position in a state where the first feed means 49 surrounds the first molding drum 13 from the outer side thereof, the holders 61, 62 synchronously move toward the radially inner side by a moving mechanism including a fluid cylinder and a link (not shown) such that the arcuate bodies 63, 64 suckingly hold the ply band 16 molded on the periphery of the first molding drum 13 from the outside thereof. Thereafter, as the first molding drum 13 radially shrinks, the pry band 16 is passed on from the first molding drum 13 to the first feed means 49.

Plural magnets (not shown) for suckingly holding each bead core 68 having a filler 67 attached thereto are embedded at the inner end portions in the axial direction of the arcuate bodies 63, 64, respectively. Accordingly, the fillers 67 and the bead cores 68 suckingly held by the arcuate bodies 63, 64 are set at a predetermined position on the outer side of the respective end portions in the axial direction of the pry band 16 helod by the first feed means 49.

71 represents a driving motor mounted to the moving frame 50. A screw shaft 72 having male screws formed on the outer periphery thereof is connected to the output shaft of the drive motor 71. The males screws are inclined in the directions opposite to each other, with the axial center of the screw shaft as the boundary therebetween. A screw block 73 mounted to the lower surface of the moving plate 53 is screwed into the rear side portion of the screw shaft 72, and a screw block 74 mounted to the lower surface of the moving plate 54 is screwed into the front side portion of the screw shaft 72. Accordingly, as the screw shaft 72 is rotated by the operation of the driving motor 71, the support ring 59 and the arcuate body 63, as well as the support ring 60 and the arcuate body 64, move in the opposite directions to each other, with being guided by the guide rails 52, such that the pair of the support ring 59 and the arcuate body 63 and the pair of the support ring 60 and the arcuate body 64 approach/are separated from each other.

By designing such that the pair of the support ring 59 and the arcuate body 63 and the pair of the support ring 60 and the arcuate body 64 can approach/be separated from each other as described above, in a case where the length in the axial direction of the ply band 16 molded by the first molding drum 13 is changed, the ply band 16 can be reliably held from the outside thereof, with preventing the ply band 16 from crashing, collapse-deforming or the like, only by making the pair of the support ring 59 and the arcuate body 63 and the pair of the support ring 60 and the arcuate body 64 approach/be separated from each other in accordance with the axial length of the pry band 16. The moving frame 50, the slide bearing 51, the guide rails 52, the moving plates 53, 54, the slide bearings 55, 56, the support rings 59, 60, the holders 61, 62, the arcuate bodies 63, 64, the driving motor 71, the screw shaft 72, the screw blocks 73, 74, described above, as a whole constitute the first feed means 49 for feeding the ply band 16 from the first molding drum 13 to the third molding drum 38.

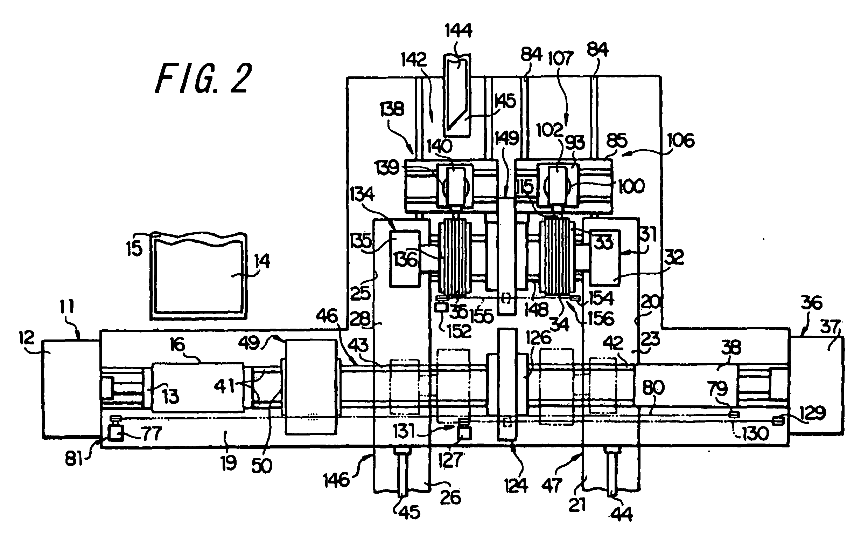

As shown in FIG. 2, 77 represents a driving motor mounted to the base 19 in the vicinity of the driving portion 12 of the first molding machine 11. A belt 80, which is connected to the first feed means 49 in the midway thereof, is suspended between a pulley fixed on the output shaft of the driving motor 77 and a pulley 79 rotatably supported on the base 19 in the vicinity of the driving portion 37 of the third molding machine 36. When the belt 80 runs by the operation of the driving motor 77, the first feed means 49, with being guided by the guide rails 46, move in the front-end direction between the first molding drum 13 and the third molding drum 38.
The driving motor 77, the pulleys, the belt 80, as described above, as a whole constitute a driving mechanism 81 for moving the first feed means 49 between the first molding drum 13 and the third molding drum 38 along the guide rails 46.

When the first feed means 49 holding the ply band 16 is moved by the driving mechanism 81 to a position where the first feed means 49 surrounds the third molding drum 38 from the outer side thereof, bead lock bodies of the third molding drum 38 radially expands and grips each bead core 68 via the ply band 16 form the inner side in the radial direction. As the arcuate bodies 63, 64 of the first feed means 49 moves toward the outer side in the radial direction in this state, the ply band 16, the fillers 67 and the bead cores 68 are passed on from the first feed means 49 to the third molding drum 38.
Thereafter, as the bead lock bodies move toward the inner side in the axial direction such that the bead lock bodies, together with the bead cores 68, approach each other and air is supplied to the inside of the ply band 16, the ply band 16 between the bead cores 68 is expansion-deformed in a semicircular shape in a section including the center axis.

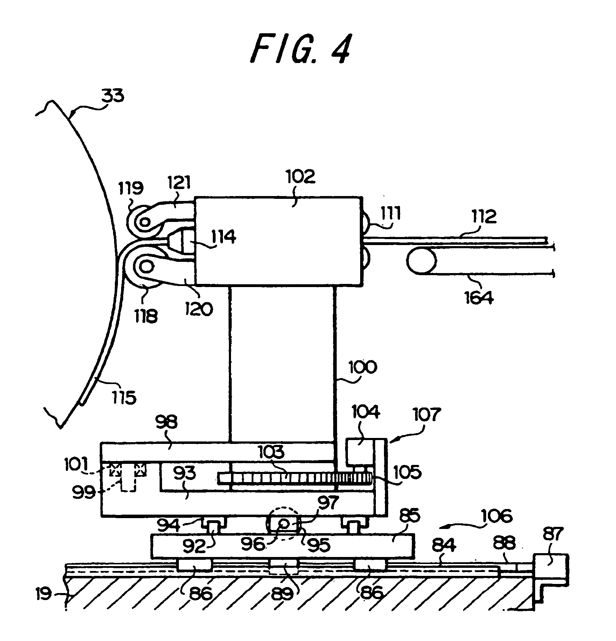

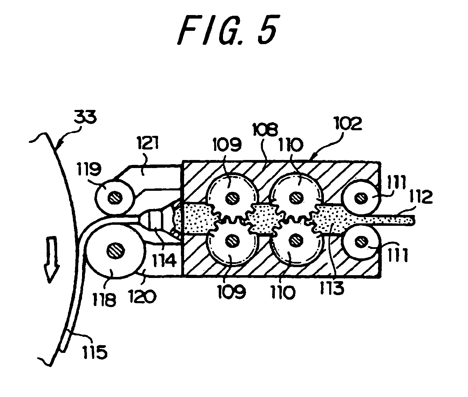

In FIGS. 1, 2, 4, and 5, a pair of guide rails 84 extending in the left-right hand side directions are provided on the base 19 at the portion on the left hand side of the second molding drum 33. Plural slide bearings 86 mounted to the lower surface of a lower plate 85 are slidably engaged with the guide rails 84. As shown in FIG. 4, 87 represents a driving motor mounted to the base 19. A screw shaft 88 connected to an output shaft of the driving motor 87 is screwed into a screw block 89 mounted to the lower surface of the lower plate 85.
Accordingly, as the screw shaft 88 is rotated by the operation of the driving motor 87, the lower plate 85 moves in the left-right hand side directions in a horizontal plane, with being guided by the guide rails 84.

92 represents a pair of guide rails provided on the upper surface of the lower plate 85. The guide rails 92 extend in parallel with the axis of the second molding drum 33, i.e. in the front-rear direction, in the horizontal plane.
93 represents an upper plate provided right above the lower plate 85. Plural slide bearings 94 slidably engaged with the guide rails 92 are mounted to the lower surface of the lower plate 93.
95 represents a driving motor mounted to the lower plate 85. A screw shaft 96 connected to an output shaft of the driving motor 95 is screwed into a screw block 97 mounted to the lower surface of the upper plate 95.

Accordingly, as the screw shaft 96 is rotated by the operation of the driving motor 95, the upper plate 93 moves in the front-rear directions in the horizontal plane with being guided by the guide rails 92.
100 represents a rotational post extending in the vertical direction. The rotational post 100 is slidably supported by the upper plate 93. A bracket 98 extending toward the second molding drum 33 is provided at the lower end portion of the rotational post 100. A rotational shaft 99 extending in the vertical direction right under a position where a rubber ribbon 115 is press-attached onto the second molding drum 33, i.e. a position where winding is started as described below, is fixed to the tip end of the bracket 98. The rotational shaft 99 is rotatably supported by being inserted into the bearing 101 provided at the right end portion of the upper plate 93. In the present invention, a gear pump-type extruder 102 is provided at the upper end of the rotational post 100 and on one side (the left hand side in the drawing) of the second molding drum 33 standing at the winding position.
103 represents an outer gear having an arcuate shape and fixed at the lower end of the rotational post 100. The center of a pitch circle of the outer gear 100 is coaxial with the rotational shaft 99. An outer gear 105, fixed to an output shaft of a driving motor 104 mounted to the upper plate 93, is geared with the outer gear 103.
Accordingly, when the driving motor 104 is actuated, the rotational post 100 is pivoted about a pivoting shaft (a vertical shaft) 99 in a horizontal plane.

The guide rails 84, the lower plate 85, the slide bearings 86, the driving motor 87, the screw shaft 88, the screw block 89, the guide rails 92, the upper plate 93, the slide bearings 94, the driving motor 95, the screw shaft 96, the screw block 97, as described above, as a whole constitute a moving mechanism 106 for two-dimensionally moving the rotational post 100 and the extruder 102 in a horizontal plane. The bracket 98, the rotational shaft 99, the rotational post 100, the bearing 101, the outer gear 103, the driving motor 104, and the outer gear 105 as a whole constitute a pivoting mechanism 107 for pivoting the extruder 102 about the vertical shaft (the pivoting shaft 99).

The extruder 102 has a case 108 extending substantially in the left-right hand side or lateral direction. A pair of gears 109, 110, which are geared with each other, are accommodated within the case 1008 such that the gears are distanced from each other in the lateral direction by some length. Paired feed rollers 111 are rotatably supported in the case 108 on the left hand side of the gears 109, 110. Belt-like rubber 112 is supplied between the feed rollers 111, whereby entrance of air into the case 108 is effectively suppressed.

As the gears 109, 110 and the feed rollers 111 are rotated by the driving force of the driving motor (not shown), the belt-like rubber 112 is pushed toward the gear 110 by the feed rollers 111, while the rubber is pressed and amorphousized, and rendered to amorphous rubber. Thereafter, the amorphous rubber 113 is supplied, by rotation of the gears 110, 109, between the gear 110, 109 and the inner periphery of the case 108 to the second molding drum 33 and extruded as a predetermined amount of continuous rubber ribbon 115 from an extrusion head 114 provided at the tip end (the right hand side end) of the case 108.

118, 119 represent a pair of guide rollers rotatably supported by the case 108 via brackets 120, 121. The guide rollers 118, 119 guide, for example, the rubber ribbon 115 immediately after the extrusion thereof from the extruder 102, supply the rubber ribbon to the second molding drum 33 positioned at the winding position or, more specifically, to the band intermediate body 35 and press-attach the rubber ribbon to the band intermediate body.

In this situation, the moving mechanism 106 and the pivoting mechanism 107 are operated to move the extruder 102 along a horizontal plane and pivot the extruder about the vertical shaft such that the rubber ribbon 115 extruded from the extruder 102 is spirally wound around the rotating second molding drum 33 (the band intermediate body 35) plural times, whereby at least a portion of tread having a predetermined sectional shape (contour), a cap layer in the present embodiment, is structured and a belt-tread band 34 is molded around the second molding drum 33.

As described above, in the present embodiment, an extruder 102 for supplying the rubber ribbon 115 immediately after extrusion is provided to the second molding drum 33 and at least a portion of tread (a cap layer) is structured by spirally winding the rubber ribbon 115 on the second molding drum 33 plural times. Since the rubber ribbon 115 which is hot and soft is wound around the second molding drum 33, the rubber ribbon 115 easily deforms compliant to the second molding drum 33 (the band intermediate body 35), whereby shape flaws of the tread and entrance of air between the tread and the belt can be effectively suppressed.
Regarding the rubber ribbon 115, it is acceptable to indirectly supply the rubber ribbon 115 to the second molding drum 33 via either a belt conveyer etc. or a non-extensible liner and then a festune and wind the rubber ribbon around the second molding drum, as long as the rubber ribbon 115 is wound around the second molding drum prior to the rubber ribbon being completely cooled. The rubber ribbon 115 can be compliant-deformed to a predetermined shape in a sufficient manner by such a method as described above.

Further, since at least a portion of tread (a cap layer) is structured by spirally winding the rubber ribbon 115 on the molding drum plural times, no joint portion of starting and terminal ends as observed in the prior art exists. Accordingly, thickness of the tread is made even in the circumferential direction and balance and uniformity of a tire improve. Yet further, since rubber ribbon 115 immediately after extrusion is wound around the molding drum, space for temporary storage and facilities are no longer required and intermediate storage of treads can be eliminated.

In FIGS. 1 and 2, the reference number 124 represents a second feed means provided between the first feed means 49 and the third molding drum 38. The second feed means 124 has substantially the same structure as the first feed means 49, except that a support ring having a structure similar to that of the support ring 59 is directly fixed to a moving frame 126.
127 represents a driving motor provided on the base 19 in the vicinity of the slide plate 28. A belt 130, which is connected to the second feed means 124 in the midway thereof, is suspended between a pulley fixed on the output shaft of the driving motor 127 and a pulley 129 rotatably supported on the base 19 in the vicinity of the driving portion 37 of the third molding machine 36.

When the second molding drum 33 is standing at the delivery position and the second feed means 124 is moved by the operation of the driving motor 127 to a position where the second feed means 124 surrounds the second molding drum 33 from the outer side thereof, arcuate bodies of the second feed means 124 synchronously move toward the inner side in the radial direction to hold the belt-tread band 34 molded on the periphery of the second molding drum 33 from the outer side thereof. In this situation, the second molding drum 33 radially shrinks, such that the belt-tread band 34 is passed on from the second molding drum 33 to the second feed means 124.

Next, the second feed means 124 moves rearward away from the second molding drum 33, while the second molding drum 33 moves to the winding position. The second feed means 124 holding the belt-tread band 34 then moves forward along the guide rails 46 until the second feed means is situated between the third molding drum 38 and the driving portion 37, so that the belt-tread band 34 is transferred from the second molding drum 33 to the third molding drum 38.

Thereafter, when the ply band 16 is expansion-deformed to have a semicircular sectional configuration as described above, the second feed means 124 moves to a position where the second feed means 124 surrounds the third molding drum 38 from the outer side thereof and attaches the belt-tread band 34 held by itself on the outer side in the radial direction of ply band 16. In this situation, the ply band 16 on the outer side in the axial direction of each bead core 68 is folded up around the bead core 68 by a bladder of the third molding drum 38, whereby a green tire is produced. On the other hand, when the arcuate bodies of the second feed means 124 synchronously move toward the outer side in the radial direction, the second feed means 124 moves to a standby position between the delivery position and the belt-winding position.

The driving motor 127, the pulleys and the belt 130, described above as a whole constitute a moving mechanism 131 for moving the second feed means 124 along the axis of the first molding drum 13 between the first feed means 49 and the third molding drum 38. By the operation of the driving mechanism 131, the second feed means 124 can take the belt-tread band 34 out of the second molding drum 33 at the delivery position and transfer the belt-tread band 34 to the third molding drum 38.

As described above, the second molding drum 33 is provided between the first molding drum 13 and the third molding drum 38 disposed on the same axial line; the second molding drum 33 is moved by the moving means 47 between the delivery position and the winding position; and the belt-tread band 34 thus molded is passed on from the second molding drum 33 at the delivery position to the second feed means 124. Accordingly, even in a case where a space between the second molding drum 33 and the third molding drum 38 is narrow (the space is made narrow due to the apparatus as a whole being made compact) when the second molding drum 33 is standing at the delivery position, a relatively wide space is ensured on the first molding drum 13 side of the third molding drum 38, i.e. immediately behind the third molding drum 38, in a state where the second molding drum 33 has moved to the winding position and the rubber ribbon 115 is being wound thereon, whereby a produced green tire can be easily taken out of the third molding drum 38 without any problems such as interference.

In FIGS. 1 and 2, the reference number 134 represents a fourth molding machine mounted on the upper surface of the left side portion of the slide plate 28. The fourth molding machine 134 has a driving portion 135 and a horizontal and cylindrical fourth molding drum 136 which extends forward from the driving portion 135 and is rotationally driven by the driving portion 135. The fourth molding drum 136 is radially extendable/retractable by the driving force from the driving portion 135.
When the fluid cylinder is operated to move the slide plate 28 to the left end limit, the fourth molding drum 136 moves to the winding position. In this situation, the fourth molding drum 136 is coaxial with the second molding drum 33 at the winding position thereof and faces the second molding drum 33.

Another moving mechanism 138 having substantially the same structure as the aforementioned moving mechanism 106 is provided on one side (the left hand side) of the fourth molding drum 136 at the winding position thereof. This another moving mechanism 138 is provided with a rotational post 139 and an extruder 140 having substantially the same structures of the rotational post 100 and the extruder 102, respectively. The moving mechanism 138 is further provided with a pivoting mechanism 142 having substantially the same structure of the pivoting mechanism 107. Accordingly, the rotational post 139 and the extruder 140 two-dimensionally move in a horizontal plane by the driving force from the moving mechanism 138 and is pivoted about the vertical axis by the driving force form the pivoting mechanism 142.

Rubber ribbon of rubber species different from the rubber ribbon 115 is extruded from the aforementioned extruder 140. The rubber ribbon thus extruded is supplied, for example, immediately after extrusion thereof to the fourth molding drum 136 standing at the winding position.
It is acceptable to supply the rubber ribbon indirectly to the fourth molding drum 136 as described above.
On the other hand, when the fluid cylinder is operated to move the slide plate 28 to the right end limit, the fourth molding drum 136 is moved away from the extruder 140 to the belt-winding position thereof coaxial with the first molding drum 13.

In the present invention, the second molding machine 31 (the second molding drum 33) and the fourth molding machine 134 (the fourth molding drum 136) may be respectively supported at the upper end portions of plural arms, which arms are pivotable about the lower end portions thereof in a vertical plane extending in the lateral or left-right hand side direction. These arms may be each independently pivoted by a fluid cylinder or the like so that the second molding drum 33 moves between the winding position and the delivery position and the fourth molding drum 136 moves between the winding position and the belt winding position. In this case, the arms and the fluid cylinder constitute a moving means.

A belt supply means 145 for supplying a belt 144 having substantially the same length as one circumference of the fourth molding drum 136 to the fourth molding drum 136 at the belt-winding position is provided on one side (the left hand side) of the fourth molding drum 136 and the extruder 140. The belt supply means 145 can be moved to approach the fourth molding drum 136 at the belt-winding position when the belt 144 is supplied to the fourth molding drum 136 and wound thereon.
In a state where the belt 144 has been wound around the fourth molding drum 136 and the starting and terminal ends thereof are jointed with each other, another moving means 146 including the slide plate 28 and a fluid cylinder is operated to move the fourth molding drum 136 having the belt 144 wound on the outer periphery thereof from the belt-winding position shown in phantom line to the winding line shown in solid line in FIG. 2.

According to the aforementioned structure in which the moving means 146 is provided for moving the fourth molding drum 136 between the winding position where rubber ribbon extruded from the extruder 140 is wound on the fourth molding drum 136 and the belt-winding position on the opposite side of the extruder 140 so that the belt 144 is supplied from the belt supply means 145 to the fourth molding drum 136 standing at the belt-winding position and wound around the molding drum, the structures of the extruder 140 and the belt supply means 145 can be made simple, as compared with the case where both of the belt 144 and the rubber ribbon are wound at the winding position. Besides, according to the aforementioned structure, the rubber ribbon belt 144 can be easily wound around the fourth molding machine 134 with avoiding interferences by the extruder 140 and the belt supply means 145.
Further, according to the aforementioned structure, it is possible to carry out a molding process which necessitates manual work of jointing members like a belt 144 and a molding process which can be automated such as lamination of the rubber ribbon 141 at different positions, respectively, whereby operation space can be efficiently ensured.

On the other hand, rubber ribbon extruded from the extruder 140 is supplied, for example, directly to the rotating fourth molding drum 136 and press-attached thereon. In this situation, the moving mechanism 138 and the pivoting mechanism 142 are operated to move the extruder 140 along a horizontal plane and pivot the extruder about the vertical shaft, whereby the rubber ribbon immediately after extrusion thereof is spirally wound plural times around the fourth molding drum 136, more specifically, on the periphery of the belt 144 which has been already wound around the fourth molding drum 136 and thus a portion of tread (a base layer in the present embodiment) having a predetermined sectional configuration (contour) is molded.
As described above, a band intermediate body 35 constituted of the belt 144 and a portion of the tread (a base layer) is molded at the fourth molding drum 136.

As described above, a green tire having a double-layered tread structure including a base layer and a cap layer can be easily produced by structuring the base layer of the tread by rubber ribbon extruded from the extruder 140 and the cap layer of the tread by rubber ribbon 115 extruded from the extruder 102.
In the present embodiment, the extruder 140 and the extruder 102 are each structured by a gear pump-type extruder as described above. Since a gear pump-type extruder is relatively small, the apparatus as a whole can be made relatively small.

Optionally, one or two additional extruders having substantially the same structures as those of the extruders 102, 140 may be further provided on one side (left hand side) of the second molding drum 33 and the fourth molding drum 136, such that three or four rubber layers are laminated on the outer side of the belt 144 by using rubber ribbons extruded from three or four extruders in total to structure a cylindrical tread.

148 represents a pair of guide rails provided on the upper surface of the base 19. The guide rails 148 extend in parallel with the axis of the second molding drum 33 between the respective winding positions.
149 represents a third feed means disposed between the second molding drum 33 at the winding position thereof and the fourth molding drum 136 at the winding position thereof. The third feed means 149 has substantially the same structure as the second feed means 124 and includes supporting rings and arcuate bodies.
152 represents a driving motor disposed on the base 19 in the vicinity of the winding position of the fourth molding drum 136. A belt 155, which is connected to the third feed means 149 in the midway thereof, is suspended between a pulley fixed on the output shaft of the driving motor 152 and a pulley 154 rotatably supported on the base 19 in the vicinity of the winding portion M of the second molding machine 33.

When the fourth molding drum 136 is standing at the winding position thereof, as the third feed means 149 is moved by the operation of the driving motor 152 to a position where the third feed means 149 surrounds the fourth molding drum 136 from the outside, the arcuate bodies of the third feed means synchronously move toward the inner side in the radial direction and hold the cylindrical band intermediate body 35 molded around the fourth molding drum 136 from the outer side thereof. In this situation, the fourth molding drum radially shrinks, whereby the band intermediate body 35 is passed on from the fourth molding drum 136 to the third feed means 149.
Next, the third feed means 149 is moved forward by the operation of the driving motor 152, while being guided by the guide rails 148, to a position where the third feed means 149 surrounds the second molding drum 33 standing at the winding position thereof from the outside thereof, so that the band intermediate body 35 is transferred from the fourth molding drum 136 to the second molding drum 33.

Thereafter, the second molding drum 33 radially expands and the arcuate bodies thereof synchronously move toward the outer side in the radial direction, so that the band intermediate body 35 is passed on from the third feed means 149 to the second molding drum 33.
In the present embodiment, the driving motor 152, the pulleys, the belt 155 as described above as a whole constitute a driving mechanism 156 for moving the third feed means 149 between the second molding drum 33 at the winding position thereof and the fourth molding drum 136 at the winding position thereof. When the driving mechanism 156 is operated, the third feed means 149 transfers the band intermediate body 35 from the fourth molding drum 136 at the winding position thereof to the second molding drum 33 at the winding position thereof.

In the aforementioned structure, the fourth molding drum 136 facing the second molding drum 33 is provided to be coaxial with the second molding drum 33 at the winding position thereof; another extruder 140 is provided for supplying to the fourth molding drum 136 a rubber ribbon immediately after extrusion of rubber species different from the rubber ribbon 115, to mold a portion (a base layer) of tread on the outer side of the belt 144; and the third feed means 149 is provided for transferring the band intermediate body 35, constituted of the belt 144 and a portion of the tread, from the fourth molding drum 136 to the second molding drum 33. Accordingly, portions of tread having different rubber species (a cap layer and a base layer in the present embodiment) can be easily molded at the second molding drum 33 and the fourth molding drum 136, respectively, with avoiding interference between the extruders 102, 140.

When a tread is molded by winding rubber ribbons plural times at the second molding drum 33 and the fourth molding drum 136, respectively, it takes a relatively long time for molding. By simultaneously winding the respective rubber ribbons around the second molding rum 33 and the fourth molding drum 136, the molding tire required for the tread as a whole can be shortened to be close to the molding time at the first molding drum 13 and the third molding drum 38, whereby operation efficiency improves.

In FIGS. 1 and 4, the reference numbers 160 and 161 represent screw-type heaters, respectively. These heaters 160, 161, when unvulcanized rubber at the room temperature is charged thereinto from a reel, a pallet or the like, each heat unvulcanized rubber by rotation of a screw and push the rubber out as the band-like rubber 112 described above from a head provided at the rear end thereof.
Thereafter, the respective band-like rubbers 112 are transferred by conveyers 164, 165 provided between the heater 160 and the extruder 102 and between the heater 161 and the extruder 140, toward the extruder 102 and the extruder 140, respectively.
In the present invention, it is acceptable to directly supply the heated band-like rubber from the band-like rubber producing apparatus to the extruders 102, 140. It is acceptable to use a screw-type extruder as the extruder.

Next, an operation of the present embodiment will be described.
A production process of green tires will be described hereinbelow. For convenience of explanation, description will be made by representatively extracting a single green tire. First, the member supply means 15 is moved toward the right hand side to approach the first molding drum 13. The tire constituting members 14 including at least a carcass are then sequentially supplied to and wound around the periphery of the first molding drum 13 being rotation-driven by the driving portion 12, from the member supply means 15, and the starting and terminal ends of the tire constituting members 14 are jointed with each other, whereby a cylindrical ply band 16 is molded around the first molding drum 13.
Thereafter, the member supply means 15 moves toward the left hand side and returns to the standby position thereof.

Then, the first feed means 49 on which the fillers 67 and the bead cores 68 have been set is moved rearward by the operation of the driving mechanism 81 to the position where the first feed means 49 surrounds the first molding drum 13 from the outer side thereof. The arcuate bodies 63, 64 of the first feed means 49 synchronously move toward the inner side in the radial direction and hold the ply band 16 molded around the first molding drum 13 from the outer ide thereof. In this situation, the first molding drum 13 radially shrinks and thus the ply band 16 is passed on from the first molding drum 13 to the first feed means 49.

On the other hand, the fourth molding drum 136 is moved by the moving means 146 to the belt winding position thereof. The belt supply means 145 has moved to a position where the belt supply means 145 is proximate to the fourth molding drum 136 standing at the belt winding position V thereof shown in phantom line in FIG. 2. In this state, the belt 144 is supplied from the belt supply means 145 to the fourth molding drum 136 being rotation-driven by the driving portion 135 and wound therearound and the starting and terminal ends of the belt 144 are jointed with each other, whereby the cylindrical belt 144 is molded around the fourth molding drum 136. Next, the belt supply means 145 moves toward the left hand side and returns to the standby position thereof. The fourth molding drum 136 having the cylindrical belt 144 molded on the outer periphery thereof is moved by the operation of the moving means 146, together with the slide plate 28, from the belt winding position to the wing position thereof.

Next, the moving mechanism 138 is operated to make the extruder 140 approach the fourth molding drum 136 situated at the winding position. Rubber ribbon is then extruded from the extruder 140. In this situation, since belt-like rubber heated by the heater 161 and then pushed out therefrom is transferred and supplied to the extruder 140 by the conveyer 165, there is no possibility that unvulcanized rubber runs short at the extruder 140.

Thereafter, the rubber ribbon extruded from the extruder 140 is supplied to the fourth molding drum 136 being rotation-driven by the driving portion 135 and press-attached on the fourth molding drum 136. In this situation, the moving mechanism 138 and the pivoting mechanism 142 are operated to move the extruder 140 along a horizontal plane and pivot the extruder about the vertical shaft, whereby the rubber ribbon immediately after extrusion is spirally wound around the periphery of the fourth molding drum 136 (the belt 144) plural times, and a portion (a base layer) of tread having a predetermined sectional shape is molded. As a result, the cylindrical band intermediate body 35, constituted of the belt 144 and the base layer, is molded on the outer side of the fourth molding drum 136.
Thereafter, the extruder 140 is moved away from the fourth molding drum 136 by the moving mechanism 138 and returns to the standby position thereof.

Next, when the third feed means 149 has been moved by the operation of the driving mechanism 156 to a position where the third feed means 149 surrounds the fourth molding drum 136 standing at the winding position from the outside thereof, the arcuate bodies of the third feed means 149 synchronously move toward the inner side in the radial direction and hold the band intermediate body 35 molded around the fourth molding drum 136 from the outer side thereof. In this situation, the fourth molding drum 136 radially shrinks, whereby the band intermediate body 35 is passed on from the fourth molding drum 136 to the third feed means 149. Thereafter, the third feed means 149 is moved forward by the operation of the moving mechanism 156, while the third feed mechanism 149 is being guided by the guide rails 148, to a position where the third feed means 149 surrounds the second molding drum 33 from the outer side thereof, whereby the band intermediate body 35 is transferred from the fourth molding drum 136 to the second molding drum 33.

The second molding drum 33 then radially expands, while the arcuate bodies 151 of the third feed means 149 synchronously move toward the outer side in the radial direction, whereby the band intermediate body 35 is passed on from the third feed means 149 to the second molding drum 33. The third feed means 149 is returned to the standby position between the respective winding positions thereof by the driving mechanism 156. Thereafter, the moving mechanism 106 is operated to make the extruder 102 approach the second molding drum 33 situated at the winding position thereof and the extruder 102 then sequentially extrudes the rubber ribbon 115 therefrom. In this situation, since the belt-like rubber 112, heated by the heater 160 and then pushed out therefrom, is transferred and supplied to the extruder 102 by the conveyer 164 and therefore unvulcanized rubber is unlikely to run short in the extruder 102.

The rubber ribbon 115, extruded from the extruder 102 as described above, is supplied to the second molding drum 33 being rotation-driven by the driving portion 32 and press-attached thereon. In this situation, the moving mechanism 106 and the pivoting mechanism 107 are operated to move the extruder 102 along a horizontal plane and pivot the extruder 102 about the vertical shaft, whereby the rubber ribbon 115 immediately after extrusion is spirally wound on the periphery of the second molding drum 33 (the band intermediate body 35) plural times and a portion (a cap layer) of tread having a predetermined configuration is molded.
As a result of the aforementioned operations, a cylindrical belt-tread band 34, constituted of the belt 144 and the tread (the base layer and the cap layer), is molded around the second molding drum 33.
The extruder 102 is then returns to the standby position thereof by the moving mechanism 106.

Next, when the moving means 47 is operated to move second molding drum 33, together with the slide plate 23, from the winding position to the delivery position, the second feed means 124 is moved by the operation of the driving mechanism 131 to the delivery position where the second feed means 124 surrounds the second molding drum 33 from the outer side thereof.
Thereafter, the arcuate bodies of the second feed means 124 synchronously move toward the inner side in the radial direction and hold the belt-tread band 34 molded around the second molding drum 33 from the outer side thereof. In this situation, the second molding drum 33 radially shrinks, so that the belt-tread band 34 is passed on from the second molding drum 33 to the second feed means 124. The second feed means 124 then once moves rearward away from the second molding drum 33, while the second molding drum 33 is moved by the moving means 47 from the delivery position to the winding position thereof.

When the first feed means 49 holds the ply band 16 and the second feed means 124 holds the belt-tread band 34, respectively, as described above, the driving mechanisms 81, 131 are operated to move the first feed means 49 and the second feed means 124 to the third molding drum 38, respectively, while these feed means are guided by the guide rails 46. In this situation, the second feed means 124 holding the belt-tread band 34 moves to a position between the third molding drum 38 and the driving portion 37, while the first feed means 49 holding the ply band 16 moves to a position where the first feed means 49 surrounds the third molding drum 38 from the outer side thereof. Accordingly, the ply band 16 is transferred by the first feed means 49 from the first molding drum 13 to the third molding drum 38. Thereafter, the bead lock bodies of the third molding drum 38 radially expand and hold the bead cores 68 via the ply band 16 from the inner side in the radial direction.

In this state, when the arcuate bodies 63, 64 of the first feed means 49 move toward the outer side in the radial direction, ply band 16, the fillers 67 and the bead cores 68 are passed on from the first feed means 49 to the third molding drum 38. Then, when the first feed means 49 is returned by the operation of the driving mechanism 81 to the standby position thereof between the first molding drum 13 and the slide plate 28, the bead lock bodies, together with the bead cores 68, move toward the inner side in the axial direction to approach each other, whereby air is supplied to the inside of the ply band 16 such that the pry band 16 between the bead cores 68 is expansion-deformed to have a semicircular sectional shape at the third molding drum 38.

In this situation, the driving mechanism 131 is operated to move the second feed means 124 to a position where.the second feed means 124 surrounds the third molding drum 38 from the outer side thereof, so that the belt-tread band 34 received from the second molding drum 33 is transferred by the second feed means 124 to the third molding drum 38 and attached on the outer side in the radial direction of the ply band 16 which has been expansion-deformed to have a semicircular sectional shape. The pry band 16 on the outer side in the axial direction of each bead core 68 is folded up around the bead core 68 by the bladder of the third molding drum 38, whereby a green tire is produced.
In this situation, the arcuate bodies of the second feed means 124 synchronously move toward the outer side in the radial direction, while the second feed means 124 moves to the standby position between the delivery position and the belt-winding position thereof to stand by.
Thereafter, the green tire thus produced is taken out of the third molding drum 38 and vulcanized.

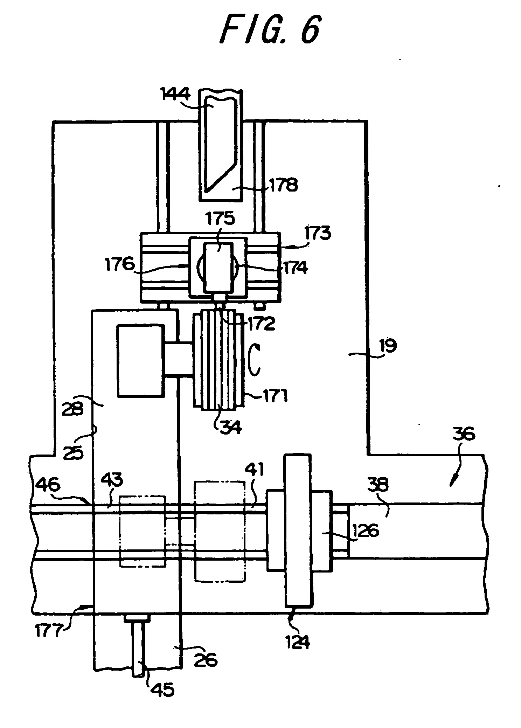

FIG. 6 is a view showing another embodiment of the present invention. In the present embodiment, the slide plate 23, the second molding machine 31 including the second molding drum 33, the moving mechanism 106, the pivoting mechanism 107, the rotational post 100, the extruder 102, the third feed means 149, the heater 160 and the conveyer 164 are omitted; the forth molding drum 136 in the foregoing embodiment is replaced by the second molding drum 171; the moving mechanism 138, the rotational post 139, the extruder 140 and the pivoting mechanism 142 are modified to a moving mechanism 173, a rotational post 174, an extruder 75 and a pivoting mechanism 176, for supplying a rubber ribbon 172 to the second molding drum 171, respectively; and the molding drums and the extruders for molding the belt-tread band 34 in the foregoing embodiment are integrated into the second molding drum 171 and the extruder 175.

Further, in the present embodiment, the second molding drum 171 is adapted to be moved between a delivery position on the axial line of the first molding drum 13, shown in phantom line in FIG. 6, and a winding position away from the axial line on one side (the left hand side in the present embodiment), shown in solid line in FIG. 6, by a moving means 177 including a fluid cylinder and the slider plate 28.
In this arrangement, a belt 144 and a belt-like rubber for constituting a base layer are sequentially supplied from a supply means 178 to the second molding drum 1171 disposed at the delivery position and wound therearound, whereby a band intermediate body 35 constituted of a belt layer and a base layer is molded around the second molding drum 171.

Next, the second molding drum 171 is moved by the moving means 177 from the delivery position to the winding position M shown in solid line in FIG. 6. Thereafter, rubber ribbon 172 extruded from the extruder 175 is spirally wound plural times, immediately after extrusion, on the periphery of the second molding drum 171 (the band intermediate body 35) to mold a cap layer of tread, whereby a cylindrical belt-tread band 34 is molded.
The second molding drum 171 is then moved by the moving means 177 from the winding position to the delivery position, so that the belt-tread band 34 thus molded is passed on to the second feed means 124.

In the present embodiment, it is acceptable to supply only the belt 144 to the second molding drum 171 and wind the belt on the drum at the delivery position and then supplying either a rubber ribbon of single rubber species from one extruder or rubber ribbons of different species from plural extruders onto the periphery of the second molding drum 171 at the winding position, so that either a tread made of one type of rubber or a tread constituted of plural rubber layers of different rubber species is molded.

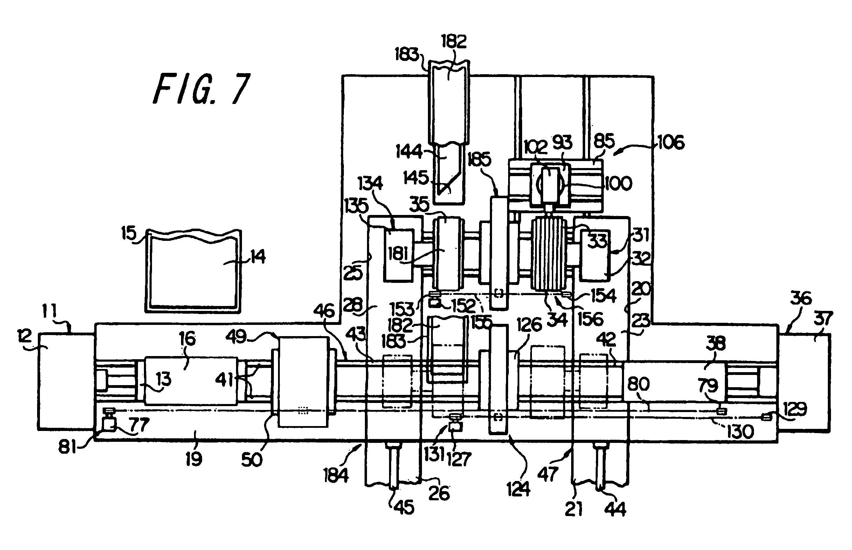

FIG. 7 is a view showing yet another embodiment of the present invention. In the present embodiment, the moving mechanism 138, the pivoting mechanism 142, the rotational post 139, the extruder 140, the heater 161 and the conveyer 165 of the first embodiment are omitted and instead there is provided a sheet supply means 183 for supplying to the fourth molding drum 181 an unvulcanized rubber sheet 182 made of rubber species different from the rubber ribbon 115 extruded from the extruder 102 and having relatively large width which is larger than the tread width.
The rubber sheet 182 as described above can be molded by either extruding unvulcanized rubber in a belt-like shape from a screw-type extruder or a gear pump-type extruder or making the unvulcanized rubber pass through between a pair of calendar rolls. The rubber sheet 182 may be cut in advance into substantially the same length as one circumference of the fourth molding drum 181. Alternatively, the rubber sheet 182 may be cut into the aforementioned length immediately before the winding or during the winding on the fourth molding drum 181.

In the present embodiment, the fourth molding drum 181 is capable of moving between a facing position shown in solid line in FIG. 7, where the fourth molding drum 181 is coaxial with and faces the second molding drum 33 standing at the winding position, and a distanced position shown in phantom line in FIG. 7, where the fourth molding drum 181 is situated on the other side (the right hand side in the present embodiment) of the facing position. The fourth molding drum 181 is moved between the aforementioned two positions by a moving means 184 having the same structure as the moving means 146 described above.
In the present embodiment, the downstream end of the sheet supply means 183 extends to a position right above the fourth molding drum 181 at the distanced position. On the other hand, the downstream end of the belt supply means 145 for supplying the belt 144 to the fourth molding drum 181 is positioned in the vicinity of the fourth molding drum 181 at the facing position. The aforementioned belt supply means 145 is generally constituted of a plural-stepped servicer.

In the present embodiment, when the belt 144 is to be supplied to the fourth molding drum 181, the fourth molding drum 181 is moved from the facing position to the distanced position and the belt supply means 145 is, in a manner compliant to the fourth molding drum 181, moved in the same direction and by the same distance as the fourth molding drum 181 is moved. Thereafter, the belt-like belt 144 is supplied from the belt supply means 145 to the fourth molding drum at the distanced position and wound around the fourth molding drum 181.
Next, the rubber sheet 182 having a relatively wide width and substantially the same length as one circumference of the fourth molding drum 181 is supplied from the sheet supply means 183 to the fourth molding drum 181 standing at the distanced position and wound around the fourth molding drum 181 by only one turn. The starting and terminal ends of the rubber sheet 182 are then jointed with each other, whereby a base layer as a portion of tread is molded on the outer side of the belt 144. According to the structure as described above where the belt 144 and the rubber sheet 182 are supplied to the fourth molding drum 181 and wound therearound at the distanced position situated at the outer edge portion of the apparatus, an operator is no longer required to enter the inside of the apparatus during the aforementioned winding operation and operations can be carried out safely. Further, according to the structure described above, the belt 144 and the rubber sheet 182 can be winding-molded at a position other than the position where the molding process which can be automated (for example, lamination of rubber ribbon) is carried out, whereby space for operations can be efficiently secured.

Alternatively, it is acceptable to carry out supply and winding of the belt 144 with respect to the fourth molding drum 181 at the facing position, then move the fourth molding drum 181 to the distanced position shown in phantom line, and supply the rubber sheet 182 from the sheet supply means 183 to the fourth molding drum 181 and wind the rubber sheet around the fourth molding drum 181 at the distanced position. According to the structure where the belt 144 and the rubber sheet 182 are wound around the fourth molding drum 181 at such a position as described above, the belt supply means 145 does not need to be moved so significantly, whereby the structure of the apparatus as a whole can be made simple and energy consumption can be reduced.

In the present invention, it is acceptable to supply both of the belt 144 and the rubber sheet 182 to the fourth molding drum 181 and wind the belt and the rubber sheet on the fourth molding drum 181 at the facing position shown in solid line in FIG. 7. Alternatively, it is acceptable to supply the rubber sheet 182 to the fourth molding drum 181 at the facing position and the belt 144 to the fourth molding drum 181 at the distanced position shown in phantom line.
In short, it suffices that the belt 144 is supplied to the fourth molding drum 181 situated at either one of the facing position and the distanced position and the rubber sheet 182 is supplied to the fourth molding drum 181 situated at the other of the distance position and the facing position.
Further, in the present invention, it is acceptable to provide, in addition to the sheet supply means 183, an extruder which is similar to the aforementioned extruder 140 for supplying rubber ribbons to the fourth molding drum 181 at the facing position, so that the supply source can be switched between this extruder and the sheet supply means 183 according to necessity.

When the band intermediate body 35, constituted of the belt 144 and a portion of tread (the base layer), is molded on the periphery of the fourth molding drum 181 by the winding as described above, the fourth molding drum 181 is moved from the distanced position to the facing position and the belt supply means 145 is returned to the initial position.
Next, the band intermediate body 35 is transferred from the fourth molding drum 181 at the facing position to the second molding drum 33 at the winding position by a third feed means 185 having the same structure as the third feed means 149.

Further, a cap layer of tread and thus a cylindrical belt-tread band 34 is molded by spirally winding the rubber ribbon 115 plural times, immediately after extrusion thereof from the extruder 102, on the periphery of the second molding drum 33 (the band intermediate body 35). Thereafter, the second molding drum 33 is moved by the moving means 47 from the winding position shown in solid line to the delivery position shown in phantom line, so that the belt-tread band 34 thus molded is passed on to the second feed means 124.

Yet further, in the present embodiment, since the fourth molding drum 181, the belt supply means 145, the sheet supply means 183 and the third feed means 185 are provided as described above, portions of tread each made of different rubber species (the cap layer and the base layer in the present embodiment) can be easily molded at the second molding drum 33 and the fourth molding drum 181 in shorter time with avoiding interference by the extruder 102 and the sheet supply means 183. Yet further, since the rubber sheet 182 having a relatively large width is supplied to the fourth molding drum 181 and wound around the fourth molding drum 181 by only one turn, the molding operation is made easy and the structure of the sheet supply means 183 can be simplified. Other structures and operations are substantially the same as those described in the foregoing embodiments.

In the embodiments described above, the first molding drum 3 3 and the third molding drum 38 are disposed to be on the same axial line and the second molding drum 33 can be positioned between the first molding drum 13 and the third molding drum 38. However, in the present invention, it is acceptable to dispose the second molding drum on a line which is orthogonal to the line linking the third molding drum and the first molding drum and passes through the third molding drum and swing the third molding drum by only 90 degrees such that the third molding drum faces the first or the second molding drum. The arrangement of the first, second and third molding drums can be modified according to necessity.

### Industrial Applicability

The present invention is applicable to an industrial field in which a green tire is produced from a pry band and a belt-tread band.

## Claims

1. A method of producing a green tire, including the steps of: molding a cylindrical ply band (16) by winding at least a carcass around a periphery of a first molding drum (13) and molding a cylindrical belt-tread band (34) around a periphery of a second molding drum (33); feeding the ply band (16) thus molded from the first molding drum (13) to a third molding drum (38) by a first feed means (49); expansion-deforming the ply band (16) into a substantially semicircular shape in a section including the center axis by the third molding drum (38), feeding, by a second feed means (124), the belt-tread band (34) molded by the second molding drum (33) from the second molding drum (33) to the third molding drum (38), and attaching the belt-tread band (34) on the outer side in the radial direction of the ply band (16) which has been expansion-deformed in a semicircular sectional shape, to produce a green tire, wherein the method further comprises the steps of:
supplying a rubber ribbon (115), extruded from an extruder (102), to the second molding drum (33); and
spirally winding the rubber ribbon (115) on the second molding drum (33) plural times to form at least a portion of the tread; and
wherein the method further comprises the steps of:
disposing the first molding drum (13) and the third molding drum (38) so as to face each other on a common axial line and disposing the second molding drum (33) between the first molding drum (13) and the third molding drum (38);
moving the second molding drum (33) by a moving means between a delivery position on the axial line and a winding position distanced from the axial line on one lateral side;
supplying rubber ribbon (115) to the second molding drum (33) standing at the winding position to structure at least a portion of tread; and
taking a belt-tread band (34) thus molded out of the second molding drum (33) standing at the delivery position by the second feed means (124).

2. An apparatus for producing a green tire, having: a first molding drum (13) for molding a cylindrical ply band (16) by winding at least a carcass around a periphery thereof; a second molding drum (33) for molding a cylindrical belt-tread band (34); a third molding drum (38) for expansion-deforming the ply band (16) into a substantially semicircular shape in a section including the center axis upon supply of the ply band (16); a first feed means (49) for feeding the ply band (16) from the first molding drum (13) to the third molding drum (38); and a second feed means (124) for feeding the belt-tread band (34) from the second molding drum (33) to the third molding drum (38) and attaching the belt-tread band (34) on the outer side in the radial direction of the pry band (16) which has been expansion-deformed in a semicircular sectional shape, to produce a green tire, wherein the apparatus further comprises:
an extruder (102) for supplying a first extruded rubber ribbon (115) to the second molding drum (33) and spirally winding a first rubber ribbon (115) on the second molding drum (33) plural times to structure at least a portion of tread; and
wherein the first molding drum (13) and the third molding drum (38) are disposed so as to face each other on a common axial line;
**characterized in that**
the second molding drum (33) is disposed between the first molding drum (13) and the third molding drum (38);
a moving means (146) is provided for moving the second molding drum (33) between a delivery position on the axial line and a winding position distanced from the axial line on one lateral side; and
the apparatus is adapted to supply the first rubber ribbon (115) to the second molding drum (33) standing at the winding position to structure at least a portion of tread and take a belt-tread band thus molded out of the second molding drum (33) standing at the delivery position by the second feed means (124).

3. The apparatus for producing a green tire of claim 2, further comprising:
a fourth molding drum (136) coaxial with and facing the second molding drum (33) at the winding position thereof;
another extruder (140) for supplying a second extruded rubber ribbon (141) made of rubber species different from the first rubber ribbon (115) to the fourth molding drum and molding a portion of tread on the outer side of a belt; and
a third feed means (149) for transferring the belt and the portion of tread thus molded from the fourth molding drum (181) to the second molding drum (33).

4. The apparatus for producing a green tire of claim 3, further comprising:
another moving means (146) for moving the fourth molding drum (181) between a winding position where rubber ribbon (141) from said another extruder (140) is wound around the fourth molding drum (181) and a belt-winding position situated on the opposite side of said another extruder (140); and
belt supply means (145) for supplying the belt to the fourth molding drum (181) standing at the belt-winding position and winding the belt on the drum (181).

5. The apparatus for producing a green tire of claim 4, wherein a base layer of tread is structured by the rubber ribbon (141) extruded from said another extruder (140) and a cap layer of tread is structured by the rubber ribbon (115) extruded from said extruder (102).

6. The apparatus for producing a green tire of any of claims 3 to 5, wherein said extruder (102) and said another extruder (140) are each structured as a gear pump-type extruder.

7. The apparatus for producing a green tire of claim 2, further comprising:
a fourth molding drum (136) capable of moving between a facing position where the fourth molding drum (136) is coaxial with and faces the second molding drum (33) standing at the winding position and a distanced position where the fourth molding drum (136) is situated on one lateral side of the facing position;
a belt supply means (145) for supplying a belt (144) to the fourth molding drum (136) situated at either the facing position or the distanced position and winding the belt (144) on the fourth molding drum (136);
a sheet supply means (183) for supplying a rubber sheet (182) having a relatively large width and made of rubber species different from the first rubber ribbon (115), to the fourth molding drum (136) situated at either the facing position or the distanced position, and winding the rubber sheet (182) on the outer side of the belt (144) by only one turn to mold a portion of tread; and
a third feed means (149) for transferring the belt and the portion of tread thus molded from the fourth molding drum (136) at the facing position to the second molding drum (33).

8. The apparatus for producing a green tire of claim 7, wherein a base layer of tread is structured by the rubber sheet (182) supplied from the sheet supply means (183) and a cap layer of tread is structured by the rubber ribbon (115) extruded from said extruder (102).

## Patentansprüche

1. Verfahren zur Herstellung eines Reifenrohlings, das die folgenden Schritte umfasst: Formen eines zylindrischen Lagenbandes (16) durch Wickeln von mindestens einer Karkasse um einen Umfang einer ersten Formtrommel (13) und Formen eines zylindrischen Gürtel-Laufflächen-Bandes (34) um einen Umfang einer zweiten Formtrommel (33); Zuführen des so geformten Lagenbandes (16) von der ersten Formtrommel (13) zu einer dritten Formtrommel (38) mittels einer ersten Zufuhreinrichtung (49); Expansionsverformen des Lagenbandes (16) zu einer im Wesentlichen halbkreisförmigen Form in einem Querschnitt, einschließlich der Mittelachse, mittels der dritten Formtrommel (38); Zuführen des Gürtel-Laufflächen-Bandes (34), das von der zweiten Formtrommel (33) geformt wird, von der zweiten Formtrommel (33) zur dritten Formtrommel (38) mittels einer zweiten Zuführeinrichtung (124); und Befestigen des Gürtel-Laufflächen-Bandes (34) auf der Außenseite in der radialen Richtung des Lagenbandes (16), das zu einer halbkreisförmigen Querschnittsform expansiorisverformt wurde, um einen Reifenrohling herzustellen, wobei das Verfahren außerdem die folgenden Schritte aufweist:
Zuführen eines Gummibandes (115), das aus einem Extruder (102) extrudiert wurde, zur zweiten Formtrommel (33); und
spiralförmiges Wickeln des Gummibandes (115) auf die zweite Formtrommel (33) mehrmals, um mindestens einen Abschnitt der Lauffläche zu formen; und
wobei das Verfahren außerdem die folgenden Schritte aufweist:
Anordnen der ersten Formtrommel (13) und der dritten Formtrommel (38) so, dass sie auf einer gemeinsamen axialen Linie einander gegenüberliegen, und Anordnen der zweiten Formtromnel (33) zwischen der ersten Formtrommel (13) und der dritten Formtrommel (38);
Bewegen der zweiten Formtrommel (33) mittels einer Bewegungseinzichtung zwischen einer Lieferposition auf der axialen Linie und einer Wickelposition, die von der axialen Linie auf einer lateralen Seite beabstandet ist;
Zuführen des Gummibandes (115) zur zweiten Formtrommel (33), die sich in der Wickelposition befindet, um mindestens einen Abschnitt der Lauffläche aufzubauen; und
Entnehmen des so geformten Gürtel-Laufflächen-Bandes (34) von der zweiten Formtrommel (33), die sich in der Lieferposition befindet, mittels der zweiten Zuführeinrichtung (124).

2. Vorrichtung zur Herstellung eines Reifenrohlings, die aufweist: eine erste Formtrommel (13) für das Formen eines zylindrischen Lagenbandes (16) durch Wickeln von mindestens einer Karkasse um einen Umfang davon; eine zweite Formtrommel (33) für das Formen eines zylindrischen Gürtel-Laufflächen-Bandes (34); eine dritte Formtrommel (38) für das Expansionsverformen des Lagenbandes (16) zu einer im Wesentlichen halbkreisförmigen Form in einem Querschnitt, einschließlich der Mittelachse, bei der Zuführung des Lagenbandes (16); eine erste Zuführeinrichtung (49) für das Zuführen des Lagenbandes (16) von der ersten Formtrommel (13) zur dritten Formtrommel (38); und eine zweite Zuführeinrichtung (124) für das Zuführen des Gürtel-Laufflächen-Bandes (34) von der zweiten Formtrommel (33) zur dritten Formtrommel (38) und Befestigen des Gürrel-Laufflächen-Bandes (34) auf der Außenseite in der radialen Richtung des Lagenbandes (16), das zu einer halbkreisförmigen Querschnittsform expansionsverformt wurde, um einen Reifenrohling herzustellen, wobei die Vorrichtung außerdem aufweist:
einen Extruder (102) für das Zuführen eines ersten extrudierten Gummibandes (115) zur zweiten Formtrommel (33) und spiralförmige Wickeln eines ersten Gummibandes (115) auf die zweite Formtrommel (33) mehrmals, um mindestens einen Abschnitt der Lauffläche aufzubauen; und
wobei die erste Formtrommel (13) und die dritte Formtrommel (38) so angeordnet sind, dass sie auf einer gemeinsamen axialen Linie einander gegenüberliegen;
**dadurch gekennzeichnet, dass**
die zweite Formtrommel (33) zwischen der ersten Formtrommel (13) und der dritten Formtrommel (38) angeordnet ist;
eine Bewegungseinrichtung (146) für das Bewegen der zweiten Formtrommel (33) zwischen einer Lieferposition auf der axialen Linie und einer Wickelposition bereitgestellt wird, die von der axialen Linie auf einer lateralen Seite beabstandet ist; und -
wobei die Vorrichtung ausgebildet ist, um das erste Gummiband (115) zur zweiten Formtrommel (33) zuzuführen, die sich in der Wickelposition befindet, um mindestens einen Abschnitt der Lauffläche aufzubauen und Entnehmen eines so geformten Gürtel-Laufflächen-Bandes von der zweiten Formtrommel (33), die sich in der Lieferposition befindet, mittels der zweiten Zuführeinrichtung (124).

3. Vorrichtung zur Herstellung eines Reifenrohlings nach Anspruch 2, die außerdem aufweist:
eine vierte Formtrommel (136) koaxial mit der und zur zweiten Formtrommel (33) in deren Wickelposition hin liegend;
einen weiteren Extruder (140) für das Zuführen eines zweiten extrudierten Gummibandes (141), das aus Gummiarten hergestellt wird, die vom ersten Gummiband (115) abweichen, zur vierten Formtrommel und Formen eines Abschnittes der Lauffläche auf der Außenseite eines Gürtels; und
eine dritte Zuführeinrichtung (149) für das Übertragen des Gürtels und des so geformten Abschnittes der Lauffläche von der vierten Formtrommel (181) zur zweiten Formtrommel (33).

4. Vorrichtung zur Herstellung eines Reifenrohlings nach Anspruch 3, die außerdem aufweist:
eine weitere Bewegungseinrichtung (146) für das Bewegen der vierten Formtrommel (181) zwischen einer Wickelposition, wo das Gummiband (141) vom weiteren Extruder (140) um die vierte Formtrommel (181) gewickelt wird, und einer Gürtelwickelposition, die sich auf der entgegengesetzten Seite des weiteren Extruders (140) befindet; und
eine Gürtelzuführeinrichtung (145) für das Zuführen des Gürtels zur vierten Formtrommel (181), die sich in der Gürtelwickelposition befindet, und Wickeln des Gürtels auf die Trommel (181).

5. Vorrichtung zur Herstellung eines Reifenrohlings nach Anspruch 4, bei der eine Basislage der Lauffläche mittels des Gummibandes (141) aufgebaut wird, das aus dem weiteren Extruder (140) extrudiert wird, und wobei eine Kappenlage der Lauffläche mittels des Gummibandes (115) aufgebaut wird, das aus dem Extruder (102) extrudiert wird.

6. Vorrichtung zur Herstellung eines Reifenrohlings nach einem der Ansprüche 3 bis 5, bei der der Extruder (102) und der weitere Extruder (140) jeweils als ein Zahnradpumpenextruder aufgebaut sind.

7. Vorrichtung zur Erstellung eines Reifenrohlings nach Anspruch 2, die außerdem aufweist:
eine vierte Formtrommel (136), die sich zwischen einer Sichtposition, wo die vierte Formtrommel (136) koaxial mit der zweiten Formtrommel (33) ist und zu ihr hin liegt, die sich in der Wickelposition befindet, und einer Distanzposition bewegen kann, wo sich die vierte Formtrommel (136) auf einer lateralen Seite der Sichtposition befindet;
eine Gürtelzuführeinrichtung (145) für das Zuführen eines Gürtels (144) zur vierten Formtrommel (136), die sich in entweder der Sichtposition oder der Distanzposition befindet, und Wickeln des Gürtels (144) auf die vierte Formtrommel (136);
eine Bahnzuführeinrichtung (183) für das Zuführen einer Gummibahn (182) mit einer relativ großen Breite und aus Gummiarten hergestellt, die vom ersten Gummiband (115) abweichen, zur vierten Formtrommel (136), die sich in entweder der Sichtposition oder der Distanzposition befindet, und Wickeln der Gummibahn (182) auf die Außenseite des Gürtels (144) mittels nur einer Windung, um einen Abschnitt der Lauffläche zu formen; und
eine dritte Zuführeinrichtung (149) für das Übertragen des Gürtels und des so geformten Abschnittes der Lauffläche von der vierten Formtrommel (136) in der Sichtposition zur zweiten Formtrommel (33).

8. Vorrichtung zur Herstellung eines Reifenrohlings nach Anspruch 7, bei der eine Basislage der Lauffläche mittels der Gummibahn (182) aufgebaut wird, die von der Bahnzuführeinrichtung (183) zugeführt wird, und bei der eine Kappenlage der Lauffläche mittels des Gummibandes (115) aufgebaut wird, das vom Extruder (102) extrudiert wird.

## Revendications

1. Procédé de fabrication d'un bandage pneumatique cru, englobant les étapes ci-dessous : moulage d'une bande de nappe cylindrique (16) en enroulant au moins une carcasse autour d'une périphérie d'un premier tambour de moulage (13), et moulage d'une bande cylindrique de ceinture-bande de roulement (34) autour d'une périphérie d'un deuxième tambour de moulage (33) ; transfert de la bande de nappe (16) ainsi moulée du premier tambour de moulage (13) vers un troisième tambour de moulage (38) par l'intermédiaire d'un premier moyen de transfert (49) ; déformation par expansion de la bande de nappe (16) en une forme à section pratiquement semi-circulaire, englobant l'axe central, par le troisième tambour de moulage (38), transfert, par un deuxième moyen de transfert (124), de la bande de ceinture-bande de roulement (34), moulée par le deuxième tambour de moulage (33), du deuxième tambour de moulage (33) vers le troisième tambour de moulage (38), et fixation de la bande de ceinture-bande de roulement (34) sur le côté externe dans la direction radiale de la bande de nappe (16), déformée par expansion en une forme à section semi-circulaire, pour produire un bandage pneumatique cru, le procédé comprenant en outre les étapes ci-dessous :
amenée d'un ruban de caoutchouc (115), extrudé par une extrudeuse (102), vers le deuxième tambour de moulage (33) ; et
enroulement à plusieurs reprises du ruban de caoutchouc (115) en spirale sur le deuxième tambour de moulage (33) pour former au moins une partie de la bande de roulement ; et
le procédé comprenant en outre les étapes ci-dessous ;
agencement du premier tambour de moulage (13) et du troisième tambour de moulage (38) de sorte qu'ils se font face sur une ligne axiale commune, et agencement du deuxième tambour de moulage (33) entre le premier tambour de moulage (13) et le troisième tambour de moulage (38) ;
déplacement du deuxième tambour de moulage (33) par un moyen de déplacement entre une position de décharge sur la ligne axiale et une position d'enroulement espacée de la ligne axiale sur un côté latéral ;
amenée du ruban de caoutchouc (115) vers le deuxième tambour de moulage (33) agencé au niveau de la position d'enroulement, pour structurer au moins une partie de la bande de roulement ; et
retrait d'une bande de ceinture-bande de roulement (34) ainsi moulée du deuxième tambour de moulage (33) agencé au niveau de la position de décharge, par le deuxième moyen de transfert (124).

2. Appareil de fabrication d'un bandage pneumatique cru, comportant : un premier tambour de moulage (13), pour mouler une bande de nappe cylindrique (16) en enroulant au moins une carcasse autour d'une périphérie de celle-ci ; un deuxième tambour de moulage (33), pour mouler une bande de ceinture-bande de roulement cylindrique (34) ; un troisième tambour de moulage (38), pour déformer par expansion la bande de nappe (16) en une forme à section pratiquement semi-circulaire, englobant l'axe central, lors du transfert de la bande de nappe (16) ; un premier moyen de transfert (49) pour transférer la bande de nappe (16) du premier tambour de moulage (13) vers le troisième tambour de moulage (38) ; et un deuxième moyen de transfert (124), pour transférer la bande de ceinture-bande de roulement (34) du deuxième tambour de moulage (33) vers le troisième tambour de moulage (38), et pour fixer la bande de ceinture-bande de roulement (34) sur le côté externe, dans la direction radiale de la bande de nappe (16), ayant été déformée par expansion en une forme à section pratiquement semi-circulaire, pour produire un bandage pneumatique cru, l'appareil comprenant en outre :
une extrudeuse (102) pour amener une premier ruban de caoutchouc extrudé (115) vers le deuxième tambour de moulage (33) et enrouler à plusieurs reprises un premier ruban de caoutchouc (115) en spirale sur le deuxième tambour de moulage (33), afin de structurer au moins une partie de la bande de roulement ; et
le premier tambour de moulage (13) et le troisième tambour de moulage (38) étant agencés de sorte à se faire face sur une ligne axiale commune ;
**caractérisé en ce que** :
le deuxième tambour de moulage (33) est agencé entre le premier tambour de moulage (13) et le troisième tambour de moulage (38),
un moyen de déplacement (146) est destiné à déplacer le deuxième tambour de moulage (33) entre une position de décharge sur la ligne axiale et une position d'enroulement espacée de la ligne axiale sur un côté latéral et
l'appareil est adapté pour amener le premier ruban de caoutchouc (115) vers le deuxième tambour de moulage (33) agencé au niveau de la position d'enroulement, pour structurer au moins une partie de la bande de roulement et retirer une bande de ceinture-bande de roulement ainsi moulée du deuxième tambour de moulage (33), agencé au niveau de la position de décharge, par le deuxième moyen de transfert (124).

3. Appareil de fabrication d'un bandage pneumatique cru selon la revendication 2, comprenant en outre :
un quatrième tambour de moulage (136), coaxial au deuxième tambour de moulage (33) et faisant face à celui-ci au niveau de sa position d'enroulement ;
une extrudeuse additionnelle (140), pour transférer un deuxième ruban de caoutchouc extrudé (141), composé de types de caoutchouc différents de ceux du premier ruban de caoutchouc (115), vers le quatrième tambour de moulage et pour mouler une partie de la bande de roulement sur le côté externe d'une ceinture ; et
un troisième moyen de transfert (149), pour transférer la ceinture et la partie de la bande de roulement ainsi moulées du quatrième tambour de moulage (181) vers le deuxième tambour de moulage (33).

4. Appareil de fabrication d'un bandage pneumatique cru selon la revendication 3, comprenant en outre :
un moyen de déplacement additionnel (146) pour déplacer le quatrième tambour de moulage (181) entre une position d'enroulement, dans laquelle le ruban de caoutchouc (141) provenant de ladite extrudeuse additionnelle (140) est enroulé autour du quatrième tambour de moulage (181), et une position d'enroulement de la ceinture située sur le côté opposé de ladite extrudeuse additionnelle (140) ; et
un moyen d'amenée de la ceinture (145) pour amener la ceinture vers le quatrième tambour de moulage (181) agencé au niveau de la position d'enroulement de la ceinture, et pour enrouler la ceinture sur le tambour (181).

5. Appareil de fabrication d'un bandage pneumatique cru selon la revendication 4, dans lequel une couche de base de la bande de roulement est structurée par le ruban de caoutchouc (141) extrudé par ladite extrudeuse additionnelle (140), une couche de chape de la bande de roulement étant structurée par le ruban de caoutchouc (115) extrudé par ladite extrudeuse (102).

6. Appareil de fabrication d'un bandage pneumatique cru selon l'une quelconque des revendications 3 à 5, dans lequel ladite extrudeuse (102) et ladite extrudeuse additionnelle (140) sont chacune structurées sous forme d'une extrudeuse du type à pompe à engrenages.

7. Appareil de fabrication d'un bandage pneumatique cru selon la revendication 2, comprenant en outre :
un quatrième tambour de moulage (136), pouvant se déplacer entre une position à orientation face à face, dans laquelle le quatrième tambour de moulage (136) est coaxial au deuxième tambour de moulage (33) et fait face à celui-ci, agencé au niveau de la position d'enroulement, et une position espacée, dans laquelle le quatrième tambour de moulage (136) est situé sur un côte latéral de la position à orientation face à face;
un moyen d'amenée de la ceinture (145), pour amener une ceinture (144) vers le quatrième tambour de moulage (136), situé au niveau de la position à orientation face à face ou de la position espacée, et pour enrouler la ceinture (144) sur le quatrième tambour de moulage (136) ;
un moyen d'amenée d'une feuille (183), pour amener une feuille de caoutchouc (182), ayant une largeur relativement grande et composée de types de caoutchouc différents de ceux du premier ruban de caoutchouc (115), vers le quatrième tambour de moulage (136), situé au niveau de la position à orientation face à face ou de la position espacée, et pour enrouler un seul tour de la feuille de caoutchouc (182) sur le côté externe de la ceinture (144), afin de mouler une partie de la bande de roulement ; et
un troisième moyen de transfert (149), pour transférer la ceinture et la partie de la bande de roulement ainsi moulées du quatrième tambour de moulage (136), agencé au niveau de la position à orientation face à face, vers le deuxième tambour de moulage (33).

8. Appareil de fabrication d'un bandage pneumatique cru selon la revendication 7, dans lequel une couche de base de la bande de roulement est structurée par la feuille de caoutchouc (182) amenée par le moyen d'amenée de la feuille (183), une couche de chape de la bande de roulement étant structurée par le ruban de caoutchouc (115) extrudé par ladite extrudeuse (102).
